# EUROPEAN PATENT SPECIFICATION

(11) **EP 3 964 482 B1**
(45) Date of publication and mention of the grant of the patent: **17.04.2024**
(21) Application number: 20195094.6
(22) Date of filing: 08.09.2020
(51) Int. Cl.: C02F 1/00, B01D 24/00, B01D 29/00, B01D 29/58, E03B 11/02, B01D 24/18, E03B 11/00

(54) **COMBINED PRESSURIZED WATER TANK AND WATER FILTER**
KOMBINATION AUS DRUCKWASSERTANK UND WASSERFILTER
RÉSERVOIR D'EAU PRESSURISÉ ET FILTRE À EAU COMBINÉS

(43) Date of publication of application: 09.03.2022
(73) Proprietor: Aqua Expert AB, 35245 Växjö (SE)
(72) Inventor: HÖJER, Martin, 352 43 VÄXJÖ (SE)
(74) Representative: AWA Sweden AB

(56) References cited:
- EP-A1- 0 933 337
- EP-A1- 2 930 276

## Description

### FIELD OF TECHNOLOGY

The present disclosure relates to a combined pressurized water tank and water filter.

### BACKGROUND

Combined pressurized water tanks and water filters save space, since they may replace separate pressurized water tanks and filter. However, known solutions of such a combined pressurized water tank and water filters are often large, and relatively inaccessible regarding service, maintenance, and the like. Hence, there is need for a more compact combined pressurized water tank and water filter, which is assessible to a user in that it is easy and fast to maintain. EP 2 930 276 A1 discloses a combined pressurized water tank and water filter.

### SUMMARY

Thus, it is an object of the invention to provide a combined pressurized water tank and water filter that has a compact size with respect to installation space.

Another object of the invention is to provide a combined pressurized water tank and water filter that is easy and fast to maintain.

According to the invention, there is provided a combined pressurized water tank and water filter, comprising a first water filter section, and a second water filter section, said first water filter section and said second water filter section, in installed position, being located in an interior of said combined pressurized water tank and water filter, wherein said first water filter section comprises a granular material resting on an interior surface of said combined pressurized water tank and water filter, wherein said second water filter section comprises a filter cartridge housing at least partly being embedded in said granular material and, in operation, is configured to at least partly enclose at least one replaceable filter cartridge containing at least one filter medium, and wherein said combined pressurized water tank and water filter is configured to allow water for filtering to flow through, in sequence, said first water filter section and said second water filter section.

Throughout this disclosure, "pressure tank", "combined pressure tank and water filter", and the like, should be understood as having been designed to withstand the overpressures relevant for domestic water supply, which typically exceeds 5 bar. Furthermore, they should be understood as having been manufactured according to the relevant EU regulations for pressure vessels.

This configuration of the granular material and the filter cartridge housing allows the dimensions of the combined pressurized water tank and water filter to be relatively compact due to the fact that the filter cartridge housing is embeddable in the granular material of the first filter section, which reduces installation space. Further, this configuration allows for using a large amount of granular material, enhancing filtering efficiency.

The at least one replaceable filter cartridge allows a filter cartridge being optionally and easily replaced, should either or both of the filter medium of the at least one replaceable filter cartridge and the at least one replaceable filter cartridge be worn out, the type of contamination of water for filtering change, or the like, thereby enhancing flexibility as well as saving time and cost. A filter cartridge, as used herein, may be an enclosure comprising a sleeve and two opposingly directed at least partly open ends. Such a filter cartridge may thereby contain a filter material and allowing water to flow between the opposingly directed at least partly open ends.

Preferably, the combined pressurized water tank and water filter is a hydrophore tank in that its interior contains, when in use, both a water amount and an air pocket. When the interior of the combined pressurized water tank and water filter is pressurized, the air pocket is compressed such that it accumulates an internal pressure, relieving a raw water pump of the combined pressurized water tank and water filter. Thanks to the hydrophore tank, the pump does not need to start every time a water tap is opened in the water conduit system. The combined pressurized water tank and water filter may be used solely as a hydrophore tank, solely a filter tank, or a combination thereof, enhancing the flexibility of the combined pressurized water tank and water filter.

According to an embodiment the combined pressurized water tank and water filter may comprise a mantle, a first end cap, and a second end cap, said first and second end cap being attachable to said mantle, wherein at least one of said first end cap and said second end cap may be detachable from said mantle.

By allowing at least one of the first and second end caps being detachable enables a convenient replacing of filter materials or other maintenance of an interior of the combined pressurized water tank and water filter.

According to an embodiment, the granular material of said first water filter section may comprise either or both of a particle-filtering material and a deacidification material.

As water for filtering enters the combined pressurized water tank and water filter, for example through an air injector, iron from possibly iron-contaminated water may oxidize and form particles. These particles, and possibly other reminiscent particles, may effectively be captured in the particle-filtering material. The first water filter section may further be configured to allow a reduction the pH of water for filtering by optionally choosing a suitable filter medium.

According to an embodiment, said granular material of said first water filter section may comprise one or more of the following substances: sand, gravel, dolomite, lime granular, activated carbon, arsenic or crystalline zeolite.

The granular material is preferably used for assuring an effective filtering of water-insoluble particles in water for filtering. Deacidification, i.e. an increasing of the pH, of water for filtering may preferably be performed by using a granular material comprising soft-burned dolomite.

According to an embodiment said first water filter section may comprise a plurality of layers of different granular materials.

Using a plurality of layers of different granular materials enables a wide action program in that enabling filtering out particles and deacidificating water for filtering when flowing through the first filter section. The granular materials of the different layers may be optionally chosen to filter a specific type of particle-contaminated water, and a granular material may be easily replaced should a type of water contamination change.

According to an embodiment, at least one of said at least one filter medium of said second water filter section may comprise a chemically active filter medium.

A chemically active filter medium may involve a change of individual atoms or molecules in water for filtering. Such a filter medium may therefore interact with charged atoms or molecules contained in water for filtering in that they are filtered out, or that charged atoms or molecules captures or releases one or more electrons such that they become charge neutral. Hence, the second water filter section may enabling filtering of chemically active substances when water for filtering passes the chemically active filter medium, which further purifies water for filtering.

According to an embodiment, at least one of said at least one filter medium of said second water filter section may comprise an ion-exchanging filter medium.

An ion-exchanging filter medium filters out unwanted dissolved ions from water for filtering in that the unwanted dissolved ions are exchanged by other ions having a similar charge. An advantage with this embodiment is that the ion-exchanging filter medium may allow filtering of either or both of anions and cations of water for filtering.

According to an embodiment, at least one of said at least one filter medium of said second water filter section comprises a resin filter medium.

According to an embodiment, said filter cartridge housing may be substantially centrally mountable in said combined pressurized water tank and water filter when seen in a geometrical plane perpendicular to an elongated axial extension of said mantle.

This enhances stability of the combined pressurized water tank and water filter as a centre of gravity becomes centrally located with respect to said geometrical plane.

According to an embodiment, said filter cartridge housing may be configured to, in operation, enclose a plurality of filter cartridges, said plurality of filter cartridges preferably being axially separated along an axial extension of said filter cartridge housing.

Arranging the plurality of filter cartridges axially separated allows for a wider action program for several different filters to be arranged in the same throughflow in a compact manner.

According to an embodiment, said at least one replaceable filter cartridge may be removable along an axial extension of said filter cartridge housing.

This allows the replaceable filter cartridge to be conveniently replaced, reducing downtime, especially in combination with the first or the second end cap of a housing of the combined pressurized water tank and water filter being detachable.

According to an embodiment, said filter cartridge housing may comprise an inlet opening and an outlet opening preferably being axially separated along said axial extension of said filter cartridge housing, allowing water for filtering to flow through said filter cartridge housing.

An advantage of this embodiment is that water for filtering substantially flows along the axial extension of the filter cartridge housing thereby extending a contact time for water for filtering flowing through the filter medium of the second water filter section, thereby streamlining filtering.

The filter cartridge housing may be elongated along its axial extension.

According to an embodiment, the combined pressurized water tank and water filter may be configured for allowing water for filtering to flow through, in sequence, said granular material along a first direction, and said filter cartridge housing along a second direction, wherein said second direction is substantially opposite relative to said first direction.

An advantage of allowing water for filtering to flow in two opposing directions is that the water inlet and a water outlet may be located close to each other, preferably in proximity of the top of the combined pressurized water tank and water filter, reducing a risk of water leakage, should the water inlet/outlet be damaged, or the like.

Preferably, the first direction is substantially parallel to the axial extension of the mantle of the combined pressurized water tank and water filter. Preferably a water inlet is located in proximity of the first end cap of the combined pressurized water tank and water filter. When the combined pressurized water tank and water filter is in use, the water inlet is preferably located in proximity of the top of the combined pressurized water tank and water filter.

According to an embodiment said first direction may be, when said combined pressurized water tank and water filter is in use, directed substantially vertically downwards.

By allowing water for filtering, entering through the water inlet, to flow vertically downwards through the granular material ensures an even and controlled filtering process.

The filter cartridge housing preferably has an elongated geometry having an axial extension preferably substantially coinciding with the axial extension of the mantle of the combined pressurized water tank and water filter. Hence, when water for filtering enters the second water filter unit, after having passed the granular material, the water for filtering is forced to proceed substantially vertically upwards through the at least one filter cartridge. Such a vertically upwards water flow allows for an enhanced physical contact with the filter medium as well as a faster filtering process. This allows using less filtering material to obtain a certain degree of water filtering, saving time, cost and installation space.

According to an embodiment, the combined pressurized water tank and water filter may be configured to allow water for regeneration of said granular material of said first water filter section and said at least one filter material of said at least one filter cartridge to flow in a reverse flow direction.

Allowing water for regeneration of a filter material to flow in a reverse flow direction enables a fast and convenient restoring of a water filtering capacity of the first and second water filter section. This is referred to as "backflushing" the water filter media of the first and the second water filter unit. That is, both the granular material and the filter medium of the at least one filter cartridge may be restored simultaneously, saving time and water consumption compared to a separate regeneration of respective water filter section, as well as extending the lifetime of respective water filter section.

A further advantage is that a volume of the air pocket, to a certain extent, remains substantially constant during the water flow, extending the lifetime of a compression pump of the combined pressurized water tank and water filter.

According to an embodiment, the at least one chemically active filter medium may comprise a compound being able to substantially adjust a level of any one or any combination of the following water properties, hardness, color or odor from a water amount flowing through the at least one resin filter medium.

According to an embodiment, the at least one chemically active filter medium may comprise an anion-exchanging filter medium.

According to an embodiment, the at least one chemically active filter medium may comprise a cation-exchanging filter medium.

According to an embodiment, at least one of the plurality of filter cartridges may comprise a chemically active filter medium.

According to an embodiment, at least one chemically active filter medium is located in an interior of the filter cartridge housing.

According to an embodiment, said combined pressurized water tank and water filter may be configured to allow water for filtering to flow, in sequence, from the water outlet, through the second water filter unit along the first direction, to a second water outlet of the combined pressurized water tank and water filter, allowing a regeneration of the second water filter section.

According to an embodiment, at least one of the at least one filter medium of the second water filter section may comprise a sodium salt, or any other material having similar water filtering properties as sodium salt.

According to an embodiment, the combined pressurized water tank and water filter may be configured for allowing water for filtering to flow through, in sequence, said water inlet, said granular material along said first direction, and a second water outlet, wherein said second water outlet is located, when said pressurized water tank and water filter is in use, in proximity of a bottom of said combined pressurized water tank and water filter.

The water flow path may be advantageously directed such that it solely flows through the granular material provided chemical filtering is deemed unnecessary, improving the flexibility of the combined pressurized water tank and water filter.

According to an embodiment water for filtering may, after having passed the first and the second water filter sections, be returned by a circulating pump located between an inlet and an outlet of the combined pressurized water tank and water filter such that water for filtering may flow through the first and the second water filter sections a plurality of times.

An advantage of this embodiment is that less water filtering material may be used in the first and the second water filter section by allowing water for filtering to flow, according to the procedure outlined above, through the first water filter section and the second water filter section a plurality of times. The circulating pump may be flow controlled in order to ensure a sufficient empty bed contact time of respective water filter section.

According to an embodiment, the water inlet may be located in proximity of the top of the mantle, when the combined pressurized water tank and water filter is in a use position.

An advantage of this embodiment is that the granular material may be relatively gently fluidized. A further advantage of this embodiment is that a smaller volume of water is required when restoring the first and the second water filter sections by means of backflushing.

According to an embodiment, the combined pressurized water tank and water filter may comprise an air injector.

An advantage of this embodiment is that a water amount required when backflushing the first and second water filter sections may be significantly reduced.

According to an embodiment, the combined pressurized water tank and water filter may be configured to allow backflushing of the first water filter section and the second water filter section in either or both of a manual operational mode and an automatic operational mode.

A further advantage is that the combined pressurized water tank and water filter may conveniently be configured to operate as a hydrophore tank alone, as well as being configured to operate as a water filter tank alone. The combined pressurized water tank and water filter may further operate as a particle filtering water tank alone or a chemically filtering water tank alone, besides the combined operational mode disclosed above.

A further advantage is that a plurality of similar said combined pressurized water tank and water filter may be serially connected, allowing usage in wide action programs.

### BRIEF DESCRIPTION OF THE DRAWINGS

The above, as well as additional objects, features and advantages of the present invention, will be better understood through the following illustrative and non-limiting detailed description of preferred embodiments, with reference to the appended drawings, where the same reference numerals will be used for similar elements, wherein:
Fig. 1 shows a cross-sectional view of a combined pressurized water tank and water filter.
Fig 2 shows a cross-sectional view of the second water filter section and a flowing direction of water for filtering flowing through the second water filter section.
Fig. 3 shows a perspective view of a preferred embodiment of the combined pressurized water tank and water filter.
Fig. 4 shows a cross-sectional view of a flowing direction of water for filtering flowing through the combined pressurized water tank and water filter.

### DETAILED DESCRIPTION

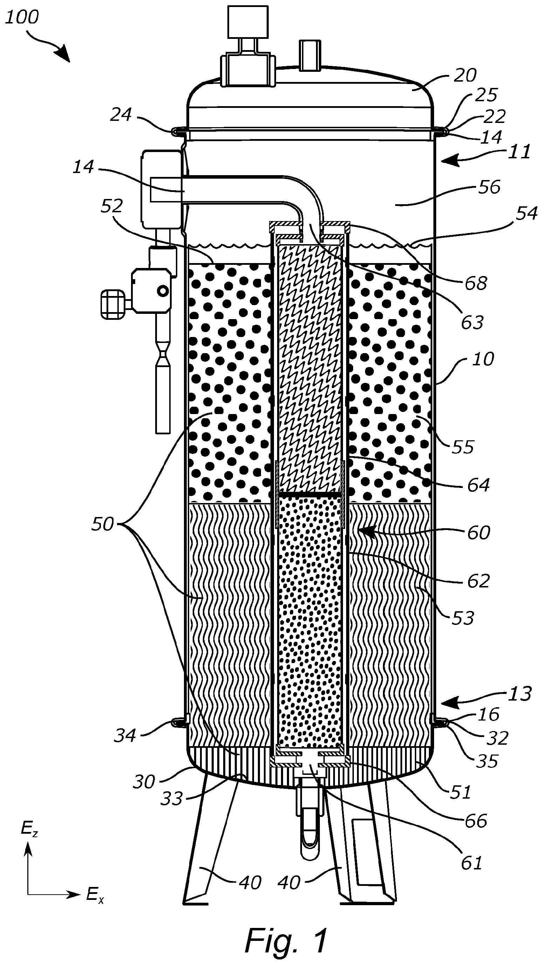

Fig. 1 shows a cross-sectional profile of one embodiment of a combined pressurized water tank and water filter 100, i.e., a pressurized water tank that also provides integrated water-filtering means, wherein the cross-sectional profile is taken along an axial extension of a mantle 10 of the combined pressurized water tank and water filter 100, and wherein the cross-sectional profile intersects a centre of the mantle 10 seen in a geometrical plane parallel to the axial extension of the mantle 10 of the combined pressurized water tank and water filter 100.

When the combined pressurized water tank and water filter 100 is in use, its interior may be subjected to a significant overpressure, and thereby be categorized as a pressure tank. The combined pressurized water tank and water filter and its connected waterconduits (not shown) supplying water to and from the combined pressurized water tank and water filter 100 are therefore designed to withstand the significant overpressure typical of domestic water supply, which may be at least, or exceed, 5 bar.

The combined pressurized water tank and water filter 100, comprises a first water filter section 50 and a second water filter section 60, both located in the interior of the combined pressurized water tank and water filter 100, in the installed position shown in Fig. 1.
The first water filter section 50 comprises a granular material 51 ;53;55. The granular material 51;53;55 rests on an interior surface 33 of the combined pressurized water tank and water filter 100.

A top surface 52 of the granular material 51 ;53;55 is substantially horizontally aligned. The top surface is preferably located below a valve connection socket 14. A water level 54 of water for filtering may preferably be located below the valve connection socket 14. Preferably, the water level 54 of water for filtering is located between the valve connection socket 14 and the top surface 52 of the granular material 51;53;55. An air pocket 56 preferably constitutes a remaining space above the water level 54 of the interior of the combined pressurized water tank and water filter 100.

A plurality of different granular materials 51 ;53;55 may constitute the first water filter section 50. Each one of the plurality of different granular materials 51 ;53;55 may have differing particle-filtering properties for water for filtering. Examples of granular materials 51;53;55 are: sand, gravel, dolomite, lime granular, activated carbon, arsenic or crystalline zeolite. The granular material 51;53;55 may be constituted by any one of these materials. The granular material 51;53;55 may be constituted by any mixture of these materials. The granular material 51;53;55 may be constituted by a plurality of layers of granular material 51;53;55, wherein each of these layers 51;53;55 may be constituted by either or both of any one and any mixture of said materials.

The first water filter section 50 may comprise a plurality of layers of granular materials 51;53;55.

A first layer of granular material 51 may be a carrier layer 51. The first layer of granular material 51 preferably at least partly fills the second end cap 30. A preferable size of a granule of the first layer of granular material 51 lies in a range between 2 and 10 mm, and more preferably between 4 and 8 mm.

A second layer of granular material 53 may be constituted by sand. A preferable size of a granule of the second layer of granular material 53 lies in a range between 0.5 and 1.5 mm, and more preferably between 0.7 and 1.3 mm.

A third layer of granular material 55 may be constituted by a deacidification material such as soft-burned dolomite. Further non-limiting examples of deacidification materials are semidol, hydrocalcite or hydrocarbonate.

Different layers of granular material 51 ;53;55 may be optionally chosen with respect to the number of layers chosen, the thickness of respective layers, the type of granular materials, and the like. A different ordering of the layers is equally possible.

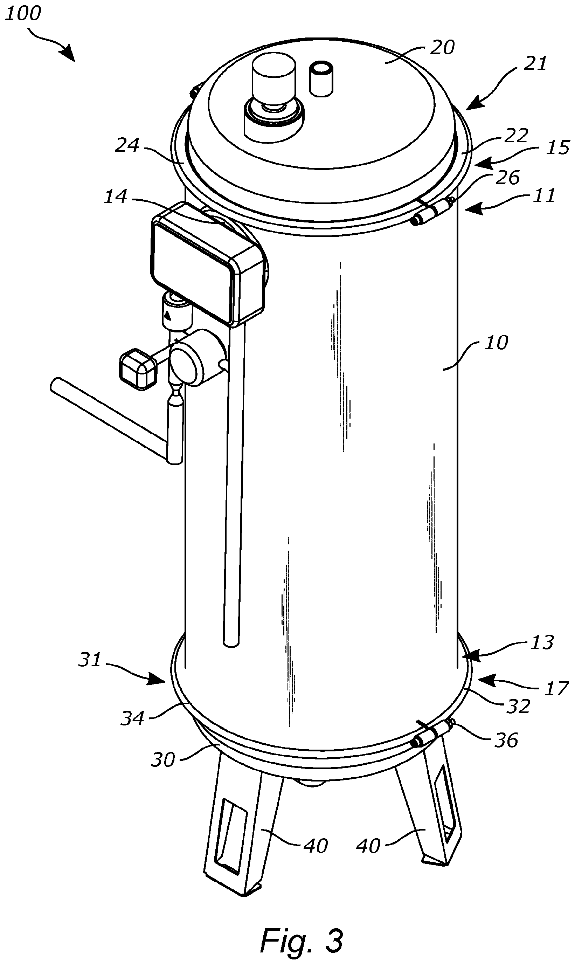

The second water filter section 60 comprises a filter cartridge housing 62. The filter cartridge housing 62 is, at least partly, with the combined pressure tank and water filter 100 in use, embedded in the granular material 51 ;53;55 of the first water filter section 50.
The filter cartridge housing 62 preferably has an elongated geometry. The filter cartridge housing 62 comprises a sleeve 64, a bottom filter cartridge housing lid 66, and a top filter cartridge housing lid 68. The filter cartridge housing 62 may have a substantially cylindrical geometry. The "bottom" and the "top" locations refer to an orientation of the filter cartridge housing 62 when the combined pressurized water tank and water filter 100 is in use position, i.e. as depicted in e.g. Figs 1 and 3. The bottom filter cartridge housing lid 66 and the top filter cartridge housing lid 68 are preferably detachable from the sleeve 62 of the filter cartridge housing 60. The sleeve 62 of the filter cartridge housing 60 has an axial extension and a transverse extension, wherein the transverse extension is a geometrical plane being transverse to the axial extension. When the filter cartridge housing 62 is in installed position, its axial extension is substantially parallel to the axial extension of the mantle 10 of the combined pressurized water tank and water filter 100. The filter cartridge housing 62 is preferably substantially concentrically mountable in said combined pressurized water tank and water filter 100. More specifically, when in installed position, the mantle 10 of the combined pressurized water tank and water filter 100 and the sleeve 64 of the filter cartridge housing 62 are preferably substantially concentrically aligned. It is however to be understood that the mantle 10 and the sleeve 64 may be substantially eccentrically aligned without departing from the scope of protection.

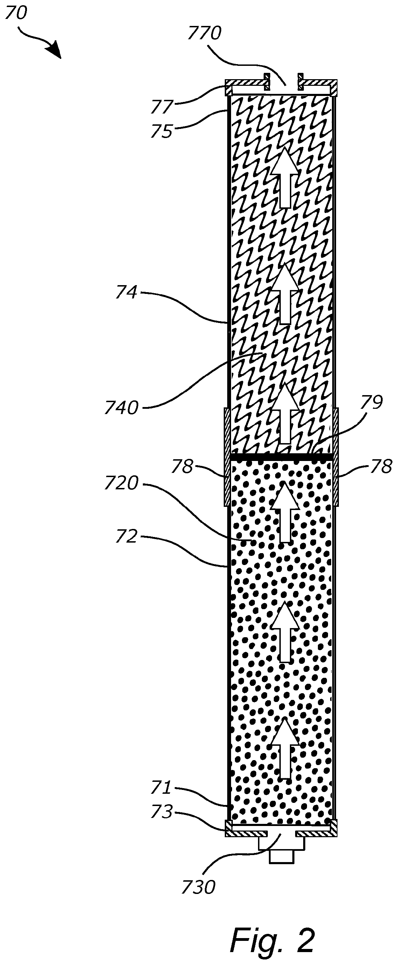

The bottom filter cartridge housing lid 66 has an inlet opening 61 and the top filter cartridge housing lid 68 has an outlet opening 63. The bottom filter cartridge housing lid 66 and the top filter cartridge housing lid 68 are preferably threaded. The threads of the bottom filter cartridge housing lid 66 and the top filter cartridge housing lid 68 may be attached to the sleeve of the filter cartridge housing 62 by complementary threads of the sleeve 64. The bottom filter cartridge housing lid 66 and the top filter cartridge housing lid 68 may preferably comprise sealing O-rings (not shown) such that, when the filter cartridge housing 62 is in installed position, respective O-ring makes contact with the sleeve 64 of the filter cartridge housing 62. Further details of interior parts of the filter cartridge housing are described in conjunction with in Fig. 2 below.

Fig. 2 shows a schematic cross-sectional view of a first 72 and a second 74 replacable filter cartridge of the second water filter section 60.

The filter cartridge housing 62 encloses the first replaceable filter cartridge 72 and the second replaceable filter cartridge 74. The first replaceable filter cartridge 72 comprises a first chemically active water-filtering medium 720. The second replaceable filter cartridge 74 comprises a second chemically active water-filtering medium 740. The first chemically active water-filtering medium may be a resin filter medium. The second chemically active water-filtering medium may be a resin filter medium. The resin filter media may be either or both of a natural type and a synthetic type. The resin filter media 720;740 are chosen to allow a high volumetric velocity, at least sufficient for a normal domestic use. It is to be understood that any type of chemically active filter medium 720;740 can be used in the second water filter section 60. The first chemically active water-filtering medium 720 is preferably a different chemically active water-filtering medium compared to the second chemically active water-filtering medium 740. It is however to be understood that the second water filter section may contain any other type of water filtering medium 720;740 within the scope of protection.

The first replaceable filter cartridge 72 and the second replaceable filter cartridge 74 are preferably joined by an internally threaded sleeve 78. The volume of respective replaceable filter cartridge 72;74 may lie within a range of volumes from 2 to 8 litres and more preferred 4 to 6 litres.

Respective replaceable filter cartridge 72;74 is removable along the axial extension of the filter cartridge housing 62.

The first 72 and the second 74 replaceable filter cartridges are mounted axially separate in the interior 70 of the filter cartridge housing 62.

A bottom filter cartridge end 71 of the first replaceable filter cartridge 72 comprises a bottom filter cartridge lid 73. A top filter cartridge end 75 of the second replaceable filter cartridge 74 comprises a top filter cartridge lid 77. The bottom filter cartridge lid 73 and the top filter cartridge lid 77 may be threaded. The bottom filter cartridge lid 73 comprises a bottom filter cartridge opening 730. The top filter cartridge lid 77 comprises a bottom filter cartridge opening 770. The bottom filter cartridge opening 730 preferably substantially coincides with the inlet opening 61 of the bottom lid 66 of the filter cartridge housing 62, when in installed position. Correspondingly, the top filter cartridge opening 770 preferably substantially coincides with the outlet opening 63 of the top lid 68 of the filter cartridge housing 62, when in installed position.

An intersectional region between the first replaceable filter cartridge 72 and the second replaceable filter cartridge 74 preferably comprises a water filter screen 79 preventing the first chemically active water-filtering medium 720 and the second chemically active water-filtering medium 740 to blend.

Thus, as per the above, the first chemically active water-filtering medium 720 may be at least partly contained in a filter cartridge 72. Correspondingly, the second chemically active water-filtering medium 740 may be at least partly contained in a filter cartridge 74.

Further, the filter cartridge housing 62 may at least partly enclose at least one replaceable filter cartridge 72;74.

The filter cartridge housing 62 may enclose the at least one replaceable filter cartridge 72;74. The filter cartridge housing 62 may at least partly enclose a plurality of replaceable filter cartridges 72:74.

The least one water-filtering medium 76 may be located in an interior 70 of the filter cartridge housing 62.

It is to be understood that more than two replaceable filter cartridges 72;74 may be joined in series in the filter cartridge housing 62 within the scope of protection. For instance, four replaceable filter cartridges may be joined in series and installed in the filter cartridge housing 62 in a similar manner as described above. Conversely, the filter cartridge housing 62 may comprise a single filter cartridge.

Fig. 3 shows a perspective view of the combined pressurized water tank and water filter 100.

The mantle 10 of the combined pressurized water tank and water filter 100 preferably has a substantially cylindrical geometry having an axial extension and a transverse extension perpendicular to the axial extension. As partly described above, and if not otherwise stated, the axial extension is substantially vertically aligned and the transverse extension is substantially horizontally aligned when the combined pressurized water tank and water filter 100 is its use position.

Preferably, a first end cap 20 is attachable to the mantle 10 of the combined pressurized water tank and water filter 100, and more preferably, the first end cap 20 and a second end cap 30 are attachable to the mantle 20 of the combined pressurized water tank and water filter 100. An interface side 15;17 of a respective first end cap 20 and second end cap 30 has a circumferential geometry similar to a respective first 11 and second 13 end section of the mantle 10, when viewed in a geometrical plane perpendicular to the axial extension of the mantle. The first end cap 20 and the second end cap 30 may have an arched side, respectively. The arched sides of the first 20 and second 30 end caps may be directed in substantially opposite directions when attached to the mantle 10. At least one of the first 20 and the second 30 end cap is detatchable from the mantle 10.

The first end cap 20 is attachable by a first fixation device, which in this embodiment comprises a first clamping ring 21, a first O-ring (not shown), and a first O-ring bracket (not shown). The first clamping ring 21 comprises a first ring section 22 and a second ring section 24. Respective first 22 and second 24 ring section comprises at least one respective bolt or screw 26 that joins the first 22 and the second 24 ring sections.

The second end cap 30 is attachable by a second fixation device, which in this embodiment is a second clamping ring 31, a second O-ring (not shown), and a second O-ring bracket (not shown). The second clamping ring 31 has a first ring section 32 and a second ring section 34. Respective first 32 and second 34 ring section is provided with at least one respecitve bolt or screw 36 that joins the first 32 and second 34 ring sections.

Either or both of the first clamping ring 21 and the second clamping ring 31 of the respective first 20 and the second 30 end cap may act as a relieving valve as an additional safety measure, should an internal pressure exceed a certain pressure limit.

The first clamping ring 21 receives an end-cap flange 25 of the first end cap 20 and an end-section flange 14 of the first end section 11 of the mantle in order to withstand any substantially axially extending overpressure in the combined pressurized water tank and water filter when in use. This is best seen in Fig. 1. Correspondingly, the second clamping ring 31 receives an end-cap flange 35 of the second end cap 30 and an end-section flange 16 of the second end section 13 of the mantle in order to withstand any substantially axially extending overpressure in the combined pressurized water tank and water filter when in use.

It is to be understood that other geometries of the mantle 10 and the first 20 and the second 30 end cap are possible within the scope of protection. The first 20 and the second 30 end cap may for instance be attachable with any other suitable fixation device. Further, it is to be understood that only one of the first 20 and the second 30 end cap may be detachable from the mantle 10 within the scope of protection.

Should any part of the combined pressurized water tank and water filter need to be replaced, only that part may be replaced, while the undamaged parts may be kept, thanks to that at least one of the first 20 and the second 30 end cap is detachable.

The mantle 10 preferably comprises a first valve connection socket 14 located in proximity of the first end section 11 of the mantle 10. Water for filtering may enter and leave the combined pressurized water tank and water filter 100 through the first valve connection socket 14. It is to be understood that water may also enter and leave the combined pressurized water tank and water filter through separate valve connection sockets within the scope of protection.

The first valve connection socket 14 preferably comprises a distributor valve (not shown). The distributor valve (not shown) may be manually or automatically controlled. The distributor valve (not shown) preferably comprises a pressure control valve (not shown) and an air injector (not shown). A compression pump (not shown) is configured to pressurize water for filtering. Pressurized water may enter the combined pressurized water tank and water filter, whereupon the water oxidizes, when reacting with oxygen of injected air from the air injector (not shown), and preciptate particles such as, for instance, iron- or manganese oxide.

At least three support feet 40 are preferably attached to the combined pressurized water tank and water filter 100. The at least three support feet 40 are preferably attached to the combined pressurized water tank and water filter 100 such that, when the combined pressurized water tank and water filter 100 stands on a surface in the use position of the combined pressurized water tank and water filter 100, e.g. on a floor, the axial extension of the mantle is substantially vertically aligned. The at least three support feet 40 are attached to the second end cap 30.

The combined pressurized water tank and water filter 100 may preferably be manufactured from steel, or any other durable material such as aluminium.

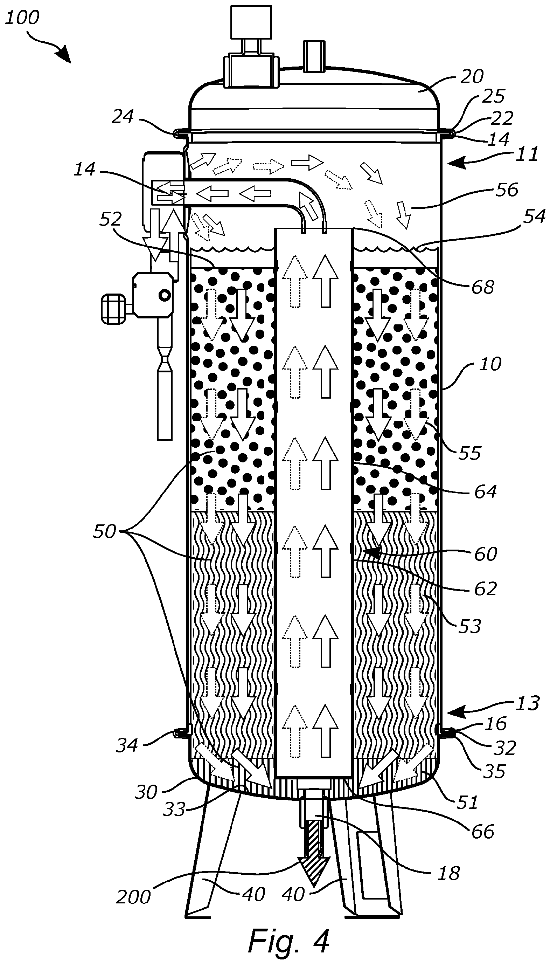

Turning to Fig. 4 there is schematically shown a flowing direction of water for filtering flowing through the combined pressurized water tank and water filter 100, seen in a similar view as that of Fig. 2. For details of certain parts; see Figs 1 and 2.

Water for filtering flows sequentially through the combined pressurized water tank and water filter 100 according to the steps:
(i) water for filtering enters the combined pressurized water tank and water filter 100 through the first valve connection socket 14;
(ii) water for filtering make contact with a top surface 52 of the granular material 51 ;53;55 of the first water filter section 50;
(iii) water for filtering flows in a first direction being substantially parallel to the axial extension of the combined pressurized water tank and water filter 100 through the granular material 51 ;53;55 of the first water filter section 50;
(iv)water for filtering enters the filter cartridge housing 62 of the second water filter section 60 through the bottom filter cartridge housing lid 66;
(v) water for filtering flows through the at least one water-filtering medium 76 of the second water filter section 60 in a direction that is substantially opposite to the first direction;
(vi)water for filtering leaves the combined pressurized water tank and water filter 100 through the first valve connection socket 14;

Thus, the combined pressurized water tank and water filter 100 is configured to allow water for filtering to flow through, in sequence, said first water filter section 50 and said second water filter section 60.

The solid arrows in Fig. 4 denote a flow direction of water for filtering that undergoes the steps (i) to (vi) above.

If required, water for filtering may undergo the additional steps after the step (v) and before the step (vi) above:
(a) water for filtering leaves the second water filter section 60 and flows to a circulating pump (not shown) located in proximity of the first valve connection socket 14;
(b) water for filtering flows according to the steps (ii)-(vi), possibly a plurality of times, before assessed sufficiently filtered;

The dashed arrows in Fig. 4 denote a flow direction of water for filtering that undergoes the additional steps (a) and (b) above.

The first direction is, when the combined pressurized water tank and water filter is in use, directed substantially downwards. More specifically, substantially downwards refers to substantially vertically downwards. Correspondingly, the second direction refers to a substantially upwards direction.

Alternatively, if filtering through the second water filter section 60 is deemed unnecessary for a specific type of raw water, water for filtering may undergo the steps (i)-(iii) above, before leaving the combined pressurized water tank and water filter through a second water outlet 18 of the combined pressurized water tank and water filter 100. In such a situation, water for filtering leaves the combined pressurized water tank and water filter 100 in a direction according to the downward arrow 200 of Fig. 4.

Water for regeneration of the granular material 51 ;53;55 of the first water filter section 50 and the at least one filter material 720;740 of the at least one filter cartridge 72;74 flows in a reverse flow direction with respect to the steps (i)-(vi) above, i.e. both the order of the steps (i)-(vi) and the flow direction of respective step are reversed. This procedure is referred to as backflushing the combined pressurized water tank and water filter 100. Such a backflushing may be performed manually or automatically.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A combined pressurized water tank and water filter (100), said combined pressurized water tank and water filter (100) comprising:
a first water filter section (50), and
a second water filter section (60),
said first water filter section (50) and said second water filter section (60), in installed position, being located in an interior of said combined pressurized water tank and water filter (100),
wherein said first water filter section (50) comprises a granular material (51;53;55) resting on an interior surface (33) of said combined pressurized water tank and water filter (100),
wherein said second water filter section (60) comprises a filter cartridge housing (62) at least partly being embedded in said granular material (51;53;55) and, in operation, is configured to at least partly enclose at least one replaceable filter cartridge (72;74) containing at least one filter medium (720;740), and
wherein said combined pressurized water tank and water filter (100) is configured to allow water for filtering to flow through, in sequence, said first water filter section (50) and said second water filter section (60).

2. The combined pressurized water tank and water filter (100) according to claim 1, comprising a mantle (10), a first end cap (20), and a second end cap (30), said first (20) and second (30) end cap being attachable to said mantle (10), wherein at least one of said first end cap (20) and said second end cap (30) is detachable from said mantle (10).

3. The combined pressurized water tank and water filter (100) according to any one of the preceding claims, wherein said granular material (51;53;55) of said first water filter section (50) comprises either or both of a particle-filtering material and a deacidification material.

4. The combined pressurized water tank and water filter (100) according to any one of the preceding claims, wherein said granular material (51;53;55) of said first water filter section (50) comprises one or more of the following substances: sand, gravel, dolomite, lime granular, activated carbon, arsenic or crystalline zeolite.

5. The combined pressurized water tank and water filter (100) according to any of the preceding claims, wherein said first water filter section (50) comprises a plurality of layers of different granular materials (51;53;55).

6. The combined pressurized water tank and water filter (100) according to any of the preceding claims, wherein at least one of said at least one filter medium (720;740) of said second water filter section (60) comprises a chemically active water-filtering medium.

7. The combined pressurized water tank and water filter (100) according to any of the preceding claims, wherein at least one of said at least one filter medium (720;740) of said second water filter section (60) comprises an ion-exchanging filter medium.

8. The combined pressurized water tank and water filter (100) according to any of the preceding claims, wherein at least one of said at least one filter medium (720;740) of said second water filter section (60) comprises a resin filter medium.

9. The combined pressurized water tank and water filter (100) according to any one of claims 2-8, wherein said filter cartridge housing (62) is substantially concentrically mountable in said combined pressurized water tank and water filter (100) when seen in a geometrical plane perpendicular to an elongated axial extension of said mantle (10).

10. The combined pressurized water tank and water filter (100) according to any of the preceding claims, wherein said filter cartridge housing (62) is configured to, in operation, enclose a plurality of filter cartridges (72;74), said plurality of filter cartridges (72;74) preferably being axially separated along an axial extension of said filter cartridge housing (62).

11. The combined pressurized water tank and water filter (100) according to any one of the preceding claims, said at least one replaceable filter cartridge (72;74) being removable along an axial extension of said filter cartridge housing (62).

12. The combined pressurized water tank and water filter (100) according to any one of the preceding claims, wherein said filter cartridge housing (62) comprises an inlet opening (61) and an outlet opening (63) being separated along an axial extension of said filter cartridge housing (62).

13. The combined pressurized water tank and water filter (100) according to any of the preceding claims, configured for allowing water for filtering to flow through, in sequence, said granular material (51;53;55) along a first direction, and said filter cartridge housing (60) along a second direction, wherein said second direction is substantially opposite relative to said first direction.

14. The combined pressurized water tank and water filter (100) according to claim 13, wherein said first direction is, when said combined pressurized water tank and water filter (100) is in use, directed substantially vertically downwards.

15. The combined pressurized water tank and water filter (100) according to claim 13, configured to allow water for regeneration of said granular material (51;53;55) of said first water filter section (50) and said at least one filter material (720;740) of said at least one filter cartridge (72;74) to flow in a reverse flow direction.

## Patentansprüche

1. Kombinierter Druckwassertank und Wasserfilter (100), wobei der kombinierte Druckwassertank und Wasserfilter (100) Folgendes umfasst:
eine erste Wasserfiltersektion (50) und
eine zweite Wasserfiltersektion (60),
wobei die erste Wasserfiltersektion (50) und die zweite Wasserfiltersektion (60), in installierter Position, in einem Inneren des kombinierten Druckwassertanks und Wasserfilters (100) angeordnet sind,
wobei die erste Wasserfiltersektion (50) ein körniges Material (51; 53; 55) umfasst, das auf einer inneren Fläche (33) des kombinierten Druckwassertanks und Wasserfilters (100) aufliegt,
wobei die zweite Wasserfiltersektion (60) ein Filterkartuschengehäuse (62) umfasst, das zumindest teilweise in dem körnigen Material (51; 53; 55) eingebettet ist und, im Betrieb, dafür konfiguriert ist, zumindest teilweise mindestens eine auswechselbare Filterkartusche (72; 74) zu umschließen, die mindestens ein Filtermedium (720; 740) enthält, und
wobei der kombinierte Druckwassertank und Wasserfilter (100) dafür konfiguriert ist, zu ermöglichen, dass Wasser zur Filterung durch, der Reihe nach, die erste Wasserfiltersektion (50) und die zweite Wasserfiltersektion (60) strömt.

2. Kombinierter Druckwassertank und Wasserfilter (100) nach Anspruch 1, der einen Mantel (10), eine erste Endkappe (20) und eine zweite Endkappe (30) umfasst, wobei die erste (20) und die zweite (30) Endkappe an dem Mantel (10) befestigbar sind, wobei mindestens eine von der ersten Endkappe (20) und der zweiten Endkappe (30) von dem Mantel (10) abnehmbar ist.

3. Kombinierter Druckwassertank und Wasserfilter (100) nach einem der vorhergehenden Ansprüche, wobei das körnige Material (51; 53; 55) der ersten Wasserfiltersektion (50) eines oder beide von einem Teilchenfilterungsmaterial und einem Entsäuerungsmaterial umfasst.

4. Kombinierter Druckwassertank und Wasserfilter (100) nach einem der vorhergehenden Ansprüche, wobei das körnige Material (51; 53; 55) der ersten Wasserfiltersektion (50) eine oder mehrere der folgenden Substanzen umfasst: Sand, Kies, Dolomit, Kalkgranulat, Aktivkohle, Arsen oder kristallines Zeolith.

5. Kombinierter Druckwassertank und Wasserfilter (100) nach einem der vorhergehenden Ansprüche, wobei die erste Wasserfiltersektion (50) eine Vielzahl von Schichten von unterschiedlichen körnigen Materialien (51; 53; 55) umfasst.

6. Kombinierter Druckwassertank und Wasserfilter (100) nach einem der vorhergehenden Ansprüche, wobei mindestens eines von dem mindestens einen Filtermedium (720; 740) der zweiten Wasserfiltersektion (60) ein chemisch aktives Wasserfilterungsmedium umfasst.

7. Kombinierter Druckwassertank und Wasserfilter (100) nach einem der vorhergehenden Ansprüche, wobei mindestens eines von dem mindestens einen Filtermedium (720; 740) der zweiten Wasserfiltersektion (60) ein lonenaustausch-Filtermedium umfasst.

8. Kombinierter Druckwassertank und Wasserfilter (100) nach einem der vorhergehenden Ansprüche, wobei mindestens eines von dem mindestens einen Filtermedium (720; 740) der zweiten Wasserfiltersektion (60) ein Harz-Filtermedium umfasst.

9. Kombinierter Druckwassertank und Wasserfilter (100) nach einem der Ansprüche 2 bis 8, wobei das Filterkartuschengehäuse (62), wenn in einer geometrischen Ebene, senkrecht zu einer länglichen axialen Ausdehnung des Mantels (10) gesehen, im Wesentlichen konzentrisch in dem kombinierten Druckwassertank und Wasserfilter (100) montierbar ist.

10. Kombinierter Druckwassertank und Wasserfilter (100) nach einem der vorhergehenden Ansprüche, wobei das Filterkartuschengehäuse (62) dafür konfiguriert ist, im Betrieb, eine Vielzahl von Filterkartuschen (72; 74) zu umschließen, wobei die Vielzahl von Filterkartuschen (72; 74) vorzugsweise in Axialrichtung entlang einer axialen Ausdehnung des Filterkartuschengehäuses (62) getrennt ist.

11. Kombinierter Druckwassertank und Wasserfilter (100) nach einem der vorhergehenden Ansprüche, wobei die mindestens eine auswechselbare Filterkartusche (72; 74) entlang einer axialen Ausdehnung des Filterkartuschengehäuses (62) entfernbar ist.

12. Kombinierter Druckwassertank und Wasserfilter (100) nach einem der vorhergehenden Ansprüche, wobei das Filterkartuschengehäuse (62) eine Einlassöffnung (61) und eine Auslassöffnung (63) umfasst, die entlang einer axialen Ausdehnung des Filterkartuschengehäuses (62) getrennt sind.

13. Kombinierter Druckwassertank und Wasserfilter (100) nach einem der vorhergehenden Ansprüche, der dafür konfiguriert ist, zu ermöglichen, dass Wasser zur Filterung durch, der Reihe nach, das körnige Material (51; 53; 55) entlang einer ersten Richtung und das Filterkartuschengehäuse (62) entlang einer zweiten Richtung strömt, wobei die zweite Richtung im Wesentlichen im Verhältnis zu der ersten Richtung entgegengesetzt ist.

14. Kombinierter Druckwassertank und Wasserfilter (100) nach Anspruch 13, wobei die erste Richtung, wenn der kombinierte Druckwassertank und Wasserfilter (100) in Verwendung ist, im Wesentlichen vertikal nach unten gerichtet ist.

15. Kombinierter Druckwassertank und Wasserfilter (100) nach Anspruch 13, der dafür konfiguriert ist, zu ermöglichen, dass Wasser zur Regeneration des körnigen Materials (51; 53; 55) der ersten Wasserfiltersektion (50) und des mindestens einen Filtermaterials (720; 740) der mindestens einen Filterkartusche (72; 74) in einer umgekehrten Strömungsrichtung strömt.

## Revendications

1. Réservoir d'eau sous pression et filtre à eau combinés (100), lesdits réservoir d'eau sous pression et filtre à eau combinés (100) comprenant :
une première section de filtre à eau (50), et
une deuxième section de filtre à eau (60),
ladite première section de filtre à eau (50) et ladite deuxième section de filtre à eau (60) se trouvant, dans une position installée, à l'intérieur desdits réservoir d'eau sous pression et filtre à eau combinés (100),
dans lesquels ladite première section de filtre à eau (50) comprend un matériau granulaire (51 ; 53 ; 55) reposant sur une surface intérieure (33) desdits réservoir d'eau sous pression et filtre à eau combinés (100),
dans lesquels ladite deuxième section de filtre à eau (60) comprend un boîtier de cartouche de filtre (62) au moins partiellement incorporé dans ledit matériau granulaire (51 ; 53 ; 55) et configuré, pendant le fonctionnement, pour entourer au moins partiellement au moins une cartouche de filtre remplaçable (72 ; 74) contenant au moins un support filtrant (720 ; 740), et
dans lesquels lesdits réservoir d'eau sous pression et filtre à eau combinés (100) sont configurés pour permettre à de l'eau destinée à être filtrée de s'écouler, en séquence, à travers ladite première section de filtre à eau (50) et ladite deuxième section de filtre à eau (60).

2. Réservoir d'eau sous pression et filtre à eau combinés (100) selon la revendication 1, comprenant une enveloppe (10), un premier bouchon d'extrémité (20) et un deuxième bouchon d'extrémité (30), lesdits premier (20) et deuxième (30) bouchons d'extrémité pouvant être fixés à ladite enveloppe (10), dans lesquels l'un au moins parmi le premier bouchon d'extrémité (20) et le deuxième bouchon d'extrémité (30) est détachable de ladite enveloppe (10).

3. Réservoir d'eau sous pression et filtre à eau combinés (100) selon l'une quelconque des revendications précédentes, dans lesquels ledit matériau granulaire (51 ; 53 ; 55) de ladite première section de filtre à eau (50) comprend l'un ou les deux parmi un matériau de filtration de particules et un matériau désacidifiant.

4. Réservoir d'eau sous pression et filtre à eau combinés (100) selon l'une quelconque des revendications précédentes, dans lesquels ledit matériau granulaire (51 ; 53 ; 55) de ladite première section de filtre à eau (50) comprend l'une ou plusieurs des substances suivantes : le sable, les graviers, la dolomite, les granulés de chaux, le charbon actif, l'arsenic ou la zéolite cristalline.

5. Réservoir d'eau sous pression et filtre à eau combinés (100) selon l'une quelconque des revendications précédentes, dans lesquels ladite première section de filtre à eau (50) comprend une pluralité de couches de différents matériaux granulaires (51 ; 53 ; 55).

6. Réservoir d'eau sous pression et filtre à eau combinés (100) selon l'une quelconque des revendications précédentes, dans lesquels l'un au moins parmi lesdits au moins un supports filtrants (720 ; 740) de ladite deuxième section de filtre à eau (60) comprend un support de filtration d'eau chimiquement actif.

7. Réservoir d'eau sous pression et filtre à eau combinés (100) selon l'une quelconque des revendications précédentes, dans lesquels l'un au moins parmi les au moins un supports filtrants (720 ; 740) de ladite deuxième section de filtre à eau (60) comprend un support filtrant échangeur d'ions.

8. Réservoir d'eau sous pression et filtre à eau combinés (100) selon l'une quelconque des revendications précédentes, dans lesquels l'un au moins parmi les au moins un supports filtrants (720 ; 740) de ladite deuxième section de filtre à eau (60) comprend un support filtrant à résine.

9. Réservoir d'eau sous pression et filtre à eau combinés (100) selon l'une quelconque des revendications 2-8, dans lesquels ledit boîtier de cartouche de filtre (62) peut être monté de façon substantiellement concentrique dans lesdits réservoir d'eau sous pression et filtre à eau combinés (100) vu dans un plan géométrique perpendiculaire à une extension axiale allongée de ladite enveloppe (10).

10. Réservoir d'eau sous pression et filtre à eau combinés (100) selon l'une quelconque des revendications précédentes, dans lesquels ledit boîtier de cartouche de filtre (62) est configuré, pendant le fonctionnement, pour entourer une pluralité de cartouches de filtre (72 ; 74), ladite pluralité de cartouches de filtre (72 ; 74) étant de préférence séparées axialement le long d'un axe d'extension dudit boîtier de cartouche de filtre (62).

11. Réservoir d'eau sous pression et filtre à eau combinés (100) selon l'une quelconque des revendications précédentes, ladite au moins une cartouche de filtre remplaçable (72 ; 74) étant amovible le long d'une extension axiale dudit boîtier de cartouche de filtre (62).

12. Réservoir d'eau sous pression et filtre à eau combinés (100) selon l'une quelconque des revendications précédentes, dans lesquels ledit boîtier de cartouche de filtre (62) comprend une ouverture d'entrée (61) et une ouverture de sortie (63) séparées le long d'une extension axiale dudit boîtier de cartouche de filtre (62).

13. Réservoir d'eau sous pression et filtre à eau combinés (100) selon l'une quelconque des revendications précédentes, configurés pour permettre à de l'eau destinée à être filtrée à s'écouler, en séquence, à travers ledit matériau granulaire (51 ; 53 ; 55) le long d'une première direction, et ledit boîtier de cartouche de filtre (62) le long d'une deuxième direction, dans lesquels ladite deuxième direction est substantiellement opposée à ladite première direction.

14. Réservoir d'eau sous pression et filtre à eau combinés (100) selon la revendication 13, dans lesquels ladite première direction, lorsque lesdits réservoir d'eau sous pression et filtre à eau combinés (100) sont utilisés, est dirigée substantiellement vers le bas verticalement.

15. Réservoir d'eau sous pression et filtre à eau combinés (100) selon la revendication 13, configuré pour permettre à de l'eau destinée à régénérer ledit matériau granulaire (51 ; 53 ; 55) de ladite première section de filtre à eau (50) et ledit au moins un matériau filtrant (720 ; 740) de ladite au moins une cartouche de filtre (72 ; 74) de s'écouler dans une direction d'écoulement inverse.
